Europäisches Patentamt

European Patent Office

Office européen des brevets

(11) Numéro de publication: **0 264 311**
**A1**

## (12) DEMANDE DE BREVET EUROPEEN

(21) Numéro de dépôt: 87402059.7

(22) Date de dépôt: 15.09.87

(51) Int. Cl.⁴: **H 04 M 11/00**

(30) Priorité: 16.09.86 FR 8612941

(43) Date de publication de la demande:
20.04.88 Bulletin 88/16

(84) Etats contractants désignés:
AT BE CH DE ES FR GB GR IT LI LU NL SE

(71) Demandeur: ELF FRANCE, Société Anonyme dite:
Tour ELF 2 place de la Coupole La Défense 6
F-92400 Courbevoie (FR)

(72) Inventeur: **Batmann, Jean Claude**
34 Avenue du Baron Chaurand
F-69230 St Genis Laval (FR)

**Brochard, Gérard**
22 Rue Domrémy
F-69003 Lyon (FR)

**Charamnac, Jean-Marie**
9 Rue Gervais Bussière
F-69100 Villeurbanne (FR)

**Finas, Roland**
F-38440 Beauvoir De Marc (FR)

**Pietri, Vincent**
65 Boulevard Brune
F-75014 Paris (FR)

(54) Méthode de transmission de données d'information ou de mesure et dispositif de mise en oeuvre de la méthode.

(57) La présente invention concerne une méthode de transmission de données d'information ou de mesure et les dispositifs
de mise en oeuvre de la méthode. Selon l'invention, la méthode
de transmission de données d'information ou de mesure depuis
un dispositif local (2, 4, 7), de mesure implanté sur un site
éloigné vers une station centrale (4, 3, 6) d'interrogation
implantée sur un lieu central où les données sont traitées, par
utilisation du réseau P.T.T. (5) tout en permettant une utilisation
normale de la ligne téléphonique, comprend les étapes
suivantes pour transmettre des données depuis la station
locale (2) vers la station centrale d'interrogation (3) :
- émission d'un premier appel du central (3) vers la station
locale (2) sur la ligne (5) dont la sonnerie du poste appelé est
momentanément neutralisée,
- réitération, après un certain laps de temps, de l'appel par la
station centrale (3),
- prise de la ligne par le dispositif local,
- exécution de la procédure de transmission.

FIG.1

**Description**

## METHODE DE TRANSMISSION DE DONNEES D'INFORMATION OU DE MESURE ET DISPOSITIF DE MISE EN OEUVRE DE LA METHODE

La présente invention concerne un méthode de transmission de données d'information ou de mesure et le dispositif permettant la mise en oeuvre de la méthode.

Cette méthode peut s'appliquer de façon avantageuse dans les dispositifs de télémesure en permettant, par exemple, à partir d'un poste central ou d'une station centrale d'interroger des stations locales qui effectuent des mesures de certains paramètres, tels que par exemple la consommation en fuel d'une chaudière, la distribution d'essence dans des stations services ou des dépôts, la consommation des fluides domestiques, tels que l'électricité, le gaz, l'eau.

D'autres applications telles que la mesure de service ou d'accès à des services ou des bases de données peuvent également être envisagées.

De tels dispositifs de télémesure sont connus par l'art antérieur et se classent en trois catégories. Une première catégorie de dispositifs concerne les dispositifs dont le central se comporte en esclave et est appelé par les stations locales. Ces dispositifs présentent l'inconvénient que plusieurs stations locales peuvent en même temps décider d'accéder au central et, dans ce cas, il se produit une collision.

Une deuxième catégorie de dispositif est constituée par celle dans laquelle le central opère en maître et décide des appels en direction des stations locales. Dans ces dispositifs, le central émet un appel par l'intermédiaire des lignes téléphoniques en direction de la stations locale et celle-ci, suite à cet appel, transmet le résultat des mesures. Ces dispositifs présentent l'inconvénient qu'il suffit de déclencher un appel téléphonique en direction du poste pour obtenir la transmission des mesures, ce qui peut être gênant.

Dans cette même catégorie de dispositifs où le central est maître, on a apporté l'amélioration qui consiste à faire émettre un appel par le central et à faire suivre cet appel par un signal d'interrogation. Ce signal, selon les dispositifs, peut se produire avant ou après le signal de sonnerie. Dans le cas où le signal d'interrogation se produit avant le signal de sonnerie, ce signal d'interrogation permet à la station locale de prendre la ligne de l'abonné avant que le signal de sonnerie n'ait été envoyé. Ceci évite de déranger l'abonné inutilement. Dans ce genre de dispositif, les signaux d'interrogation sont constitués, soit par un courant continu qui est envoyé sur la ligne téléphonique, soit par une chute ou une augmentation de tension par rapport à la tension normale de la ligne, soit enfin par une fréquence donnée. Ce dernier type de dispositif à signal d'interrogation constitué par une fréquence donnée peut être illustré par la demande de Brevet Européen 0014774. De tels dispositifs, s'ils présentent une amélioration sur le plan sécuritaire de la connexion du central à la station locale, et par conséquent de la transmission, ne présentent pas moins des lacunes. En effet, un fraudeur pourrait détecter sur la ligne téléphonique le signal de fréquence envoyé pour interroger le dispositif local et par la suite effectuer des appels en les faisant suivre ou précéder de ce signal de fréquence et provoquer ainsi la transmission des informations et éventuellement la remise à zéro des compteurs ou des mémoires qui permettent la mémorisation des mesures. De plus, de tels dispositifs nécessitent des modifications importantes des installations téléphoniques existantes.

D'autre part, il est connu par la demande de brevet FR 2 373 109, d'utiliser une procédure de pré-appel suivie d'un appel sur une ligne téléphonique au bout de laquelle est connecté un appareil de télécommande qui va permettre de déclencher à distance la mise en route d'une dispositif domestique, tel que par exemple une chaudière. Dans ce dispositif, le pré-appel permet d'effectuer une pré-sensibilisation du récepteur tandis que le second appel constitue un signal d'exécution de l'ordre. On peut envisager de télécommander plusieurs appareils par la même ligne en faisant varier le nombre de sonneries du pré-appel en fonction du dispositif à commander. Dans le dispositif de la demande de brevet français 2 373 109, les appels qui suivent le pré-appel doivent comporter un nombre de sonneries égal au nombre de pré-appel à un facteur constant $K$ près.

Ce genre de dispositif de télécommande avec procédure de pré-appel est destiné à être utilisé pour une habitation qui se trouve normalement vide puisque l'on veut télécommander un appareil et par conséquent le nombre de sonneries et la sonnerie ne constituent pas un dérangement pour l'abonné qui est absent.

Enfin, quelqu'un qui appellerait la ligne sur laquelle est branché l'appareil de télécommande pourrait très bien laisser sonner pendant un nombre de fois correspondant au pré-appel, raccrocher et n'obtenant aucune réponse rappeler quelque temps après et laisser sonner pendant un nombre de sonneries correspondant à l'appel. La conséquence de cette manoeuvre fortuite serait le déclenchement de la télécommande. Par conséquent, ce type d'appareils ne permet pas de distinguer les appels correspondant réellement à une télécommande des appels fortuits pour lesquels une action ne doit pas être exécutée.

Dans la demande de brevet français n° 2 500 246, il est prévu un dispositif dans lequel la détection des trains de sonneries se fait à partir de détecteurs qui fournissent des signaux lorsqu'un signal d'appel est reçu sur une ligne. Ce dispositif prend donc en compte l'apparition du signal d'appel et ne prend pas en compte la durée ou même la nature de ce signal. Ce dispositif présente l'inconvénient d'être très sensible aux signaux parasites. En outre, l'utilisation de détecteurs se déclenchant sur l'apparition des signaux d'appels pour entraîner soit la connexion soit l'étouffement de la sonnerie entraîne que cet étouffement ne peut pas être complet et qu'il résultera toujours une petite sonnerie correspondant à l'apparition de la variation du signal d'appel.

On a aussi proposé dans la demande de brevet anglais no 2 097 223 de déclencher la connexion ou la déconnexion en parallèle par la détection de l'intervalle de temps existant entre deux signaux d'appel, ce déclenchement se faisant quand ledit intervalle de temps est supérieur à un intervalle de temps visuel. Cette disposition présente plusieurs inconvénients en particulier celui d'être très sensible à l'apparition de signaux parasites ou encore à l'apparition d'un deuxième appel complètement indépendant du premier appel (appel d'un autre abonné).

Un premier but de l'invention est de proposer une méthode de transmission de données d'information ou de mesure pour un dispositif de télémesure qui permette d'éviter les inconvénients de l'art antérieur des dispositifs de télémesure.

Ce premier but est atteint par le fait que la méthode de transmission de données d'information ou de mesure depuis un dispositif local de mesure implanté sur site éloigné vers une station centrale d'interrogation implantée sur un lieu central où les données sont traitées, par utilisation d'un réseau téléphonique tel que le réseau P.T.T. tout en permettant une utilisation normale de la ligne téléphonique, la sonnerie de l'abonné étant maintenue normalement neutralisée, est une méthode selon laquelle la transmission des données depuis la station locale vers la station centrale d'interrogation se fait selon les étapes suivantes :
- maintien de la neutralisation de la sonnerie,
- émission, pendant une durée de temps $T_0$, d'un premier appel du central vers la station locale sur la ligne dont la sonnerie du poste appelé est momenta-nément déconnectée, ledit temps $T_0$ étant au moins égal au temps au bout duquel le réseau téléphonique a pu vérifier que la ligne n'était pas occupée,
- réitération, après un certain laps de temps, de l'appel par la station centrale,
- prise de la ligne par le dispositif local,
- exécution de la procédure de transmission, et déneutralisation de la sonnerie lors de la réception par la station locale d'un premier appel d'une durée supérieure au temps $T_0$, cette déneutralisation permettant le fonctionnement normal de la ligne qui est re-neutralisée à la fin dudit appel.

Ainsi, cette méthode de reconnaissance qui est basée sur l'analyse d'un intervalle de temps permet d'éliminer les problèmes de prise en compte des parasites qui interviennent quand on travaille sur la première impulsion d'un train de sonnerie. La vérification par le réseau que la ligne n'est pas occupée nécessite un certain temps que le central émetteur puisse faire cette vérification selon le principe suivant. Lors d'un appel, la station locale reçoit, par le réseau téléphonique, par exemple le réseau PTT, un train de sonneries en réponse auquel la station centrale va recevoir, par l'intermédiaire du même réseau un écho de sonneries, qui est souvent diphasé ou retardé. Si la station locale est occupée par un autre appel, il ne va pas y avoir d'écho de sonnerie. Du fait du déphasage, l'apparition du premier écho de sonnerie peut avoir lieu après la fin de la deuxième sonnerie d'appel, ou même de la troisième. Il est donc nécessaire de prévoir un temps $T_0$ qui soit supérieur au délai d'apparition du premier écho, délai qui peut varier avec la nature du réseau téléphonique utilisé. A titre d'indication, et pour le réseau PTT utilisé en France, on choisira un temps $T_0$ qui corresponde à un délai expirant entre la deuxième et la troisième sonnerie.

Un deuxième but de l'invention est de proposer une méthode qui permette d'éliminer également les inconvénients des dispositifs de télécommande avec pré-appel, dans l'application du principe de pré-appel à des dispositifs de télémesure.

Ce deuxième but est atteint par le fait que la méthode est caractérisée en ce que la procédure de transmission comprend les étapes suivantes :
- vérification de l'absence ou de la présence d'une porteuse du modem en provenance de la station centrale d'interrogation,
- émission d'un message vocal par un dispositif générateur de message de la station locale, en cas d'absence de ladite porteuse,
- cession de la ligne téléphonique avec maintien de l'isolation de la sonnerie.

Un autre but de l'invention est de proposer une méthode dans laquelle la procédure de transmission permet d'augmenter le caractère sécuritaire.

Ce but est atteint par le fait que la méthode de transmission est caractérisé en ce que la procédure de transmission comprend les étapes suivantes :
- vérification de la présence de la porteuse du modem de la station centrale d'interrogation,
- émission par la station centrale d'interrogation d'un code secret,
- transmission des données par la station locale après réception er vérification du code secret,
- acquittement de la bonne réception par la station centrale d'interrogation,
- cession de la ligne téléphonique avec maintien de l'isolation de la sonnerie de l'abonné.

Un autre but de l'invention est de proposer une station locale permettant la mise en oeuvre de la méthode ci-dessus.

Ce but est atteint par le fait que la station locale est caractérisée en ce qu'elle comprend un circuit détecteur du signal de sonnerie, des moyens d'évaluer la durée du signal de sonnerie, des moyens d'assurer la prise et la cession de la ligne, des moyens de mesurer une variable, des moyens de mémoriser les mesures de la variable, des moyens de transmission des mesures mémorisées, des moyens de connecter et déconnecter la sonnerie de l'abonné, un microprocesseur de commande des différents moyens et de traitement des instructions d'un programme, des moyens de mémorisation du programme de commande.

Un autre but de l'invention est de proposer une station central d'interrogation permettant la mise en oeuvre de la méthode.

Ce but est atteint par le fait que la station centrale d'interrogation comprend un microprocesseur avec ses mémoires vive et morte nécessaires au fonctionnement et à l'exécution des programmes, un moyen de prise de ligne, un dispositif composeur d'appel, un modem, une interface de ligne avec dispositif duplexeur, une interface série asynchrone du type R S 232 vers un dispositif de traitement de données.

Selon une autre caractéristique, le dispositif de traitement de a station d'interrogation est constitué par un micro-ordinateur avec ses périphériques associés.

Selon une autre caractéristique, la station locale comprend un dispositif générateur de message vocal, des moyens d'affichage de la mesure mémorisée par des seconds moyens de mémorisation, une alimentation sauvegardée et un relais de commande de la déconnexion de l'appareil.

Selon une autre caractéristique, la station d'interrogation comprend un programme d'interrogation chargé par disquette sur le micro-ordinateur permettant de choisir le type de programme d'interrogation en fonction de l'application et du nombre de stations locales à appeler.

Selon une dernière caractéristique, la station d'interrogation comprend un programme de communication avec le dispositif central chargé par disquette sur le micro-ordinateur permettant de récupérer tout ou partie des données pendant les interrogations ou après la fin des interrogations.

D'autres caractéristiques et avantages de la présente invention apparaîtront plus clairement à la lecture de la description ci-après faite en référence aux dessins annexés dans lesquels :

    - la figure 1 représente une vue schématique de l'ensemble du dispositif permettant la mise en oeuvre de la méthode,

    - la figure 2 représente le schéma fonctionnel d'une station locale,

    - la figure 3 représente le schéma fonctionnel d'une station centrale d'interrogation,

    - la figure 4 représente la connexion de la station locale et de la station centrale sur le réseau P.T.T.,

    - la figure 5 représente l'organigramme des différentes étapes de la méthode.

Il est bien entendu que cette description n'a aucun caractère limitatif et qu'il est possible d'utiliser d'autres éléments que ceux décrits, sans sortir du cadre de l'invention ainsi qu'il apparaîtra plus loin.

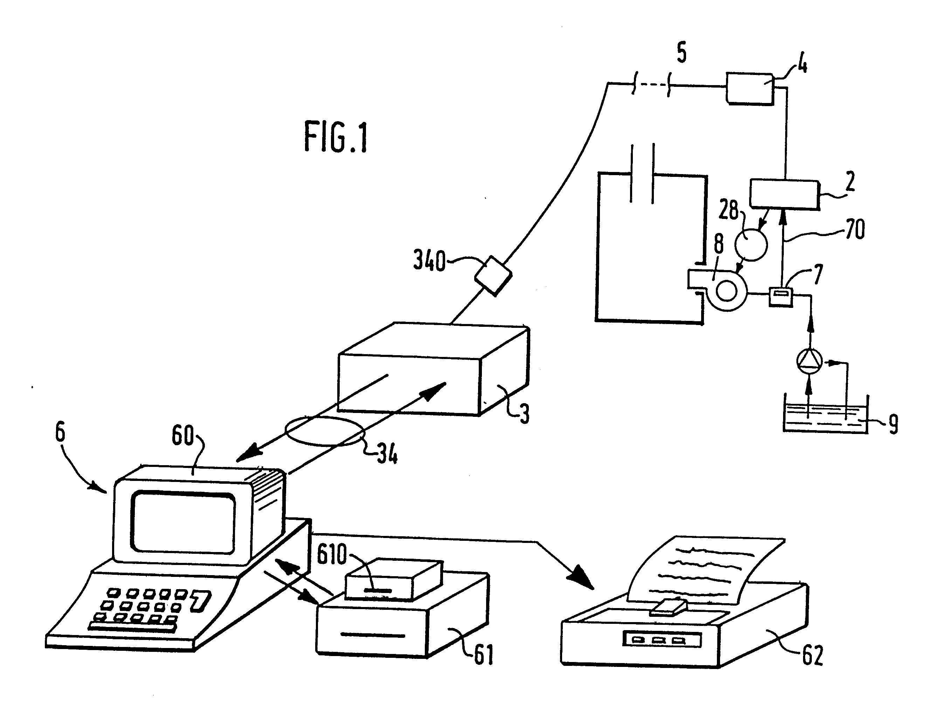

L'ensemble du dispositif permettant la mise en oeuvre de la méthode est représenté à la figure 1 et comporte une station centrale d'interrogation (3) reliée par une liaison bi-directionnelle (34) à un dispositif de traitement (6) de l'information, constitué par un micro-ordinateur (60) lui-même relié à un dispositif (61) de stockage de masse constitué par exemple par un disque dur ou une bande magnétique ou tout autre dispositif de stockage de masse. Un lecteur de disquette (610) est également relié au micro-ordinateur (60). Enfin une imprimante (62) est reliée de façon connue à ce micro-ordinateur (60) et l'ensemble de ce dispositif constitue le dispositif de traitement des données et de l'information. La station centrale d'interrogation (3) est également reliée par l'intermédiaire d'une prise gigogne (340) au réseau téléphonique (5). Une station locale (2) est elle-même reliée par l'intermédiaire d'une prise (4) au réseau téléphonique (5) et par ce réseau téléphonique (5) avec la station centrale d'interrogation. Il est bien évident que l'on a représenté une seule station locale mais que le dispositif est prévu pour fonctionner avec une pluralité de ces stations. La station locale (2) est elle-même reliée par une liaison (70) à une sonde (7) ou un capteur pour la grandeur à mesurer. Dans l'exemple représenté, cette sonde (7) est constituée par un volucompteur disposé sur le trajet du fluide constitué par du fuel alimentant le brûleur (8) d'une chaudière et provenant d'une cuve (9). Il est bien évident que l'application aux chaudières et au volucomptage ne doit pas être considérée comme étant limitative. En fait, on peut remplacer la sonde par tout autre dispositif de mesure de façon à satisfaire toutes les applications envisageables. Comme on le verra plus loin, la même station peut comporter plusieurs sondes.

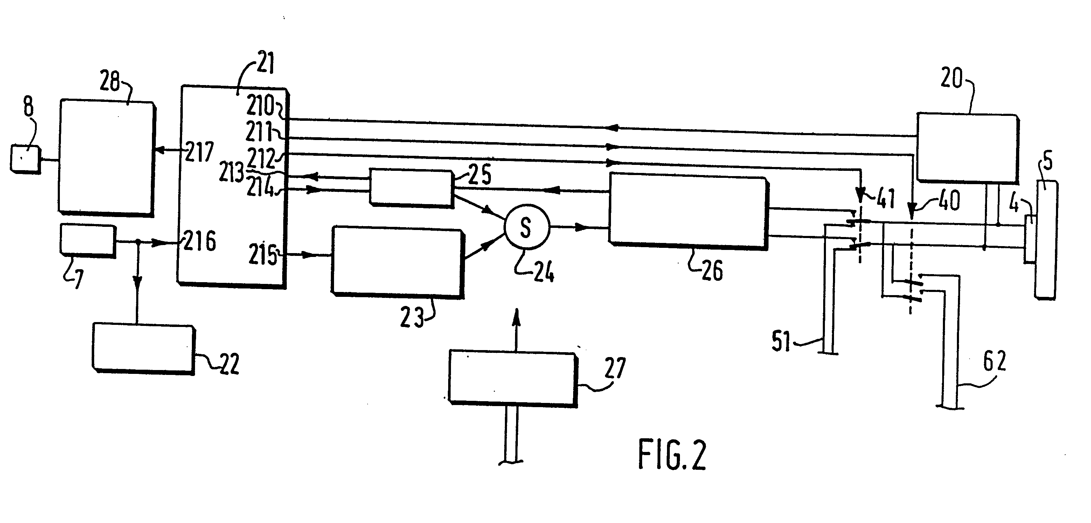

Chaque station locale est constituée comme représenté à la figure 2 par une alimentation sauvegardée (27) alimentant les différents circuits de la station. Cette station est commandée par un micro-calculateur (21) comportant un microprocesseur, ses mémoires et dispositifs d'entrée et sortie associés. Ce micro-calculateur (21) reçoit sur son entrée (216) les informations provenant de la sonde (7), lesquelles sont également envoyées sur un afficheur local (22). L'entrée (210) du micro-calculateur (21) reçoit la sortie du signal d'un détecteur de sonnerie (20) qui est relié d'autre part au réseau téléphonique (5) par la prise (4). Un premier électro-aimant (40) commande les contacts de coupure de la ligne de sonnerie (62) de l'abonné, un deuxième électro-aimant (41) commande en commutation une paire de contacts entre un position où le réseau (5) est normalement relié à la ligne (51) de l'abonné et une autre position dans laquelle le réseau (5) est relié à l'entrée d'un circuit d'interface duplexeur (26). L'électro-aimant (40) est commandé par la sortie (211) du micro-calculateur tandis que l'électro-aimant (41) est commandé par sa sortie (212). Une entrée du duplexeur (26) reçoit le signal de sortie d'un sommateur (24), tandis que la sortie de ce duplexeur (26) est envoyée sur un modem (25) dont une entrée est reliée à la sortie (214) du micro-calculateur. Une autre sortie de ce modem est reliée à l'entrée (213) du micro-calculateur. Le sommateur (24) reçoit sur une première entrée la sortie du modem (25) et sur une deuxième entrée la sortie d'un dispositif générateur de message vocal (23). Ce dispositif générateur de message vocal reçoit sur son entrée la sortie (215) du micro-calculateur qui constitue un signal de commande de la mise en route de la génération du message vocal.

Un dispositif (28) de relais de connexion et de re-connexion de l'appareil (8) permet de mettre celui-ci en état de panne dès que le micro-calculateur émet le signal adéquat représentant un mauvais fonctionnement de l'ensemble. Le dispositif (28) peut aussi être connecté à un système d'alarme ou à un système de sauvegarde ou similaire.

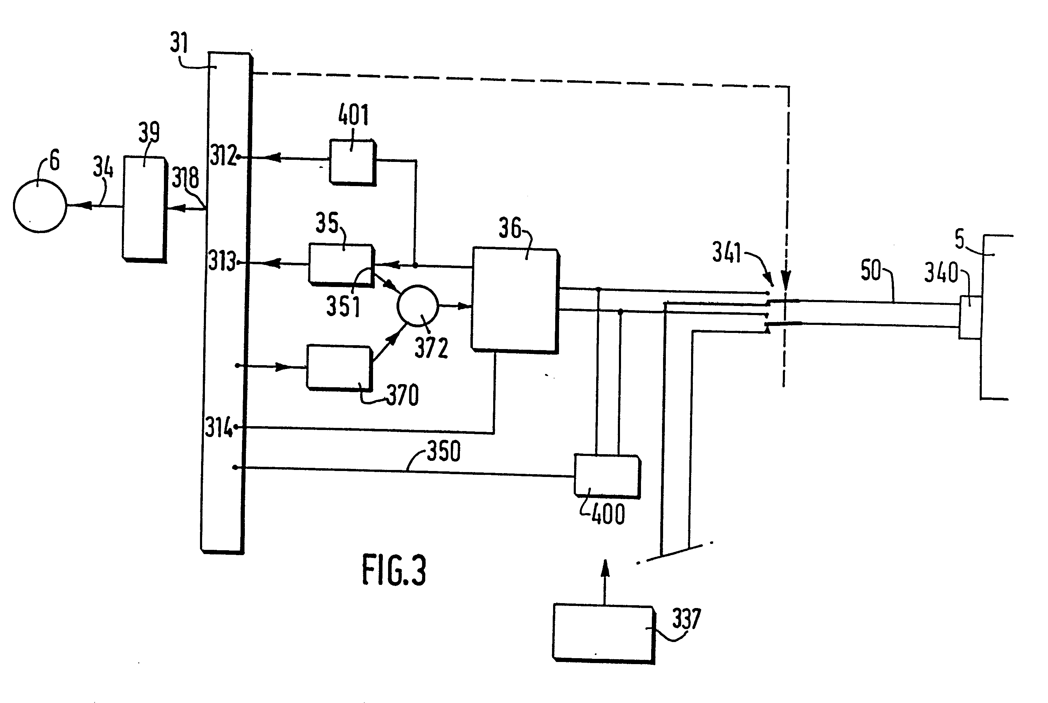

La station centrale d'interrogation représentée à la figure 3 comporte également une prise (340), un micro-calculateur (31) relié par sa sortie à l'électro-aimant (341) qui permet de connecter au réseau (5) soit la station centrale soit la ligne normale. Ce micro-calculateur reçoit sur son entrée (313) la sortie d'un modem (35) qui est relié par une liaison bi-directionnelle avec un dispositif d'interface de ligne duplexeur (36), lequel est relié par le contact de l'électro-aimant (314) au fil d'arrivée (50)˙ du réseau (5) des P.T.T. Une sortie (314) du micro-calculateur est reliée à l'équipement (36) de façon à commander sa fonction de numérotation, qui peut être soit décimale, soit multifréquentielle.

Entre la prise (340) et le dispositif d'interface de ligne duplexeur, est monté un ensemble (400) de détection de décroché qui permet de vérifier que la ligne a bien été décrochée, et de renvoyer par la ligne (350) le signal représentatif de ce bon décrochement au micro-calculateur (31). Cet ensemble de détection peut fonctionner soit par inversion de polarité soit par n'importe quelle autre méthode.

La station centrale d'interrogation comporte aussi un système d'analyse des tonalités de lignes (401) qui permet d'envoyer au micro-calculateur (31) un signal représentant l'état de la ligne, c'est-à-dire par exemple de déterminer si la ligne est occupée par reconnaissance du signal d'occupation usuel.

De la même façon que la station locale (2), la station centrale (3) comporte un générateur de message vocal (370) qui est relié au dispositif d'interface de ligne duplexeur (36) par l'intermédiaire d'un sommateur (372), monté en série avec la sortie (351) du modem (35).

La sortie (318) du micro-calculateur (31) est reliée à une interface, série asynchrone (39) du type RS 232, tel que défini par les normes de l'EIA : Electrical Industry Association. On peut bien entendu utiliser tout système connu, synchrone, asynchrone ou parallèle. Cette interface série asynchrone est reliée par une liaison bi-directionnelle (34) à l'unité de traitement des informations et des données (6). Enfin, cette station centrale d'interrogations est pourvue également d'un dispositif d'alimentation sauvegardé (337) qui permet d'assurer l'alimentation des différents composants de la station.

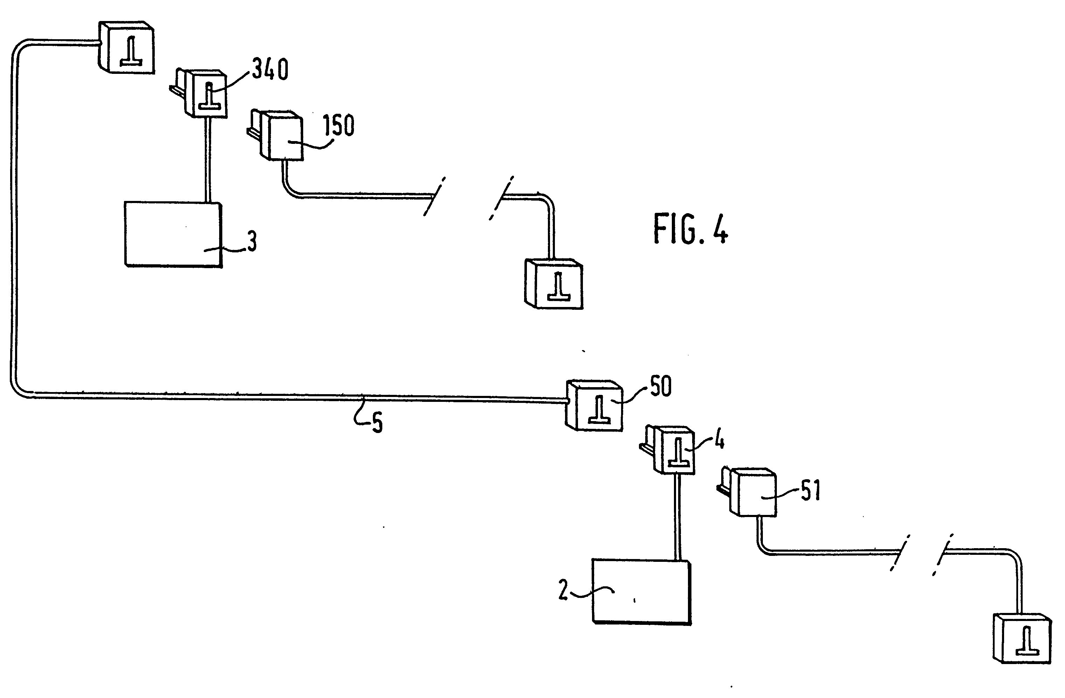

La figure 4 représente le réseau P.T.T. (5) au bout duquel se trouve une prise femelle (50) pour poste téléphonique, dans laquelle on vient enficher une prise gigogne (4). Ce conjoncteur est relié, comme on l'a représenté, par un câble à une station locale (2) ou à une station centrale d'interrogation (3). Sur ce conjoncteur (4) vient se brancher une prise mâle (51), laquelle assure l'extension de la ligne vers le poste de l'abonné. La station centrale (3) est connectée sur le réseau (5) par l'intermédiaire de la prise (340) qui peut assurer aussi une extension (151) vers une ligne normale.

Les dispositifs que l'on vient de décrire permettent de mettre en oeuvre la méthode de transmission de données d'information ou de mesure que l'on décrira ci-après en liaison avec la figure (5). Lorsqu'un opérateur souhaite interroger les stations locales pour connaître, par exemple, l'état de réserve de combustible, il dispose dans l'ordinateur d'un logiciel contenant le programme d'interrogation. Ce programme permet, par action sur le clavier, de choisir le type d'interrogation en fonction de l'application et le nombre de clients ou de stations locales à appeler. L'ordinateur transmet à la station centrale d'interrogation le numéro à composer et donne l'ordre d'effectuer un appel. La station centrale se branche sur le réseau P.T.T. par l'intermédiaire de l'électro-aimant (341).

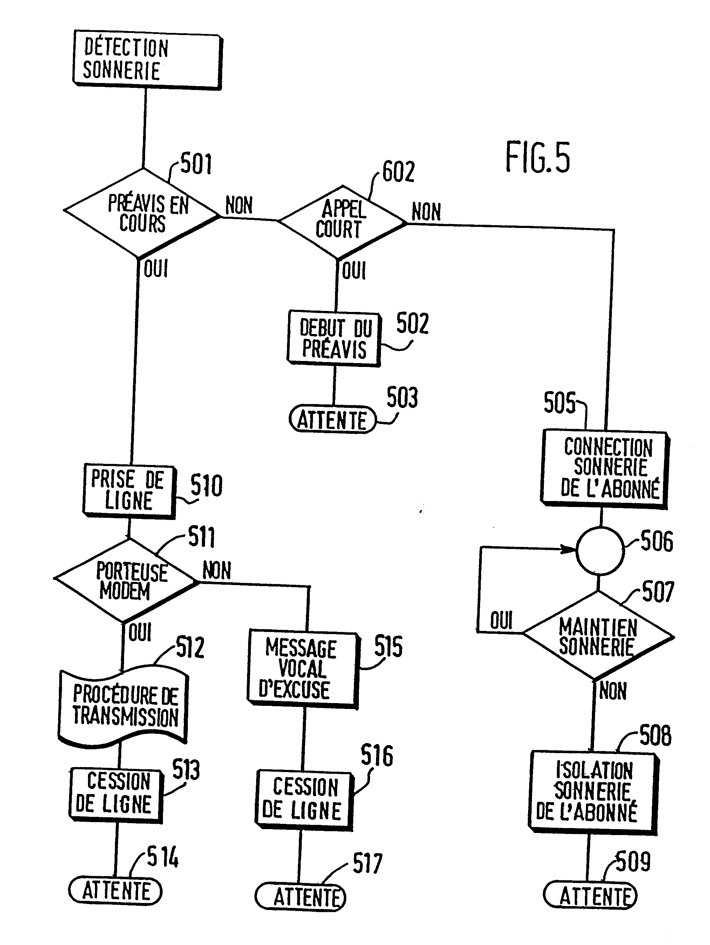

La station locale appelée reçoit, par l'intermédiaire du réseau P.T.T. un train de signaux de sonnerie, lesquels sont détectés par le circuit (20) de détection de sonnerie. A partir de ce moment, se met en oeuvre la procédure de la méthode qui est représentée à la figure 5. Dès la détection d'une sonnerie, le détecteur (20) envoie un signal sur l'entrée (210) du micro-calculateur, lequel va dérouler son programme d'application qui prévoit un premier test représenté par l'étape (501) pour déterminer si un préavis est en cours. Dans le cas où un tel préavis n'est pas en cours, on passe à l'étape suivante (602) de reconnaissance de la longueur de l'appel. Dans le cas où ils s'agit d'un appel court, c'est-à-dire dans le cas où le détecteur de sonnerie émet des signaux pendant un laps de temps inférieur à un temps déterminé T0 par un programme, le micro-calculateur détermine qu'il s'agit d'un début de préavis représenté par l'étape (502) et modifie l'état d'un moyen de mémorisation permettant de retenir qu'il s'agit d'un début de préavis. Par la suite le micro-calculateur se met en position d'attente représentée par l'étape (503). Dans ces conditions, c'est-à-dire de préavis en cours, quand on détecte à l'étape (501) une sonnerie, le micro-calculateur passe à l'étape suivante (510) qui est constituée par la prise de ligne. Cette étape s'effectue en envoyant par la sortie (212) un signal de commande à l'électro-aimant (41) pour faire basculer les contacts de façon à connecter le réseau P.T.T. au dispositif duplexeur (26).

De son côté, la station centrale d'interrogation, après la composition pour la deuxième fois du numéro de la station locale à appeler, met en route son modem, lequel va émettre sa porteuse.

Du côté de la station locale, après la prise de ligne (510), on passe à l'étape (511) constituée par un test pour déterminer si la porteuse du modem est présente ou non. Dans le cas où l'absence de la porteuse du modem est constatée, on a donc eu affaire à un appel autre qu'un appel du central constitué par exemple par un abonné effectuant par hasard un pré-appel et puis, quelque temps après, effectuant un appel normal. Le central peut également avoir entamé la procédure de pré-appel et pendant le temps d'attente du central, avant la ré-émission de son appel, un appel d'un abonné est venu s'intercaler. Dans ce cas, le dispositif passe à l'étape (515) suivante qui est constituée par l'émission d'un message vocal d'excuse émis par le dispositif (23) suite à la commande envoyée par la sortie (215) du micro-calculateur (21). A la suite de ce message vocal d'excuse, on passe à l'étape suivante (516) qui est constituée par la cession de ligne. Cette cession de ligne s'effectue en désactivant la sortie (212) du micro-calculateur, ce qui occasionne le passage dand la position de repos des contacts commandés par l'électro-aimant (41). Après cette opération de cession de ligne, on demeure en position d'attente représentée par l'étape (517).

Enfin, dans le cas où la porteuse modem a été détectée à l'étape (511), c'est-à-dire dans le cas où on a bien eu affaire à une procédure d'appel de la part du central d'interrogation, on passe à l'étape suivante constituée par la procédure de transmission des mesures effectuées par la station locale. Cette procédure de transmission représentée à l'étape (512) s'effectue de la manière suivante. Après l'émission de la porteuse du modem par la station centrale d'interrogation, cette dernière émet un code secret qui doit être reçu et vérifié par la station locale avant que celle-ci ne transmette les données mesurées par le capteur (7) et stockées dans un dispositif de mémorisation non représenté mais faisant partie intégrante du micro-calculateur (21). A la fin de la transmission des données par la station locale, la station centrale d'interrogation accuse la bonne réception des informations et la station locale cède la ligne avec maintien de l'isolation de la sonnerie de l'abonné. Cette opération est représentée par l'étape (513) de la figure 5 et la station locale se met en attente, représentée par l'étape (514). De son côté, la station centrale cède également la ligne jusqu'à mise en oeuvre d'une nouvelle procédure d'interrogation par l'opérateur.

Quand l'appel détecté à l'étape (602) n'est pas un appel court et que, à l'étape (501), il n'y a pas de préavis en cours, on passe à l'étape (505) au cours de laquelle le micro-calculateur (21) agit, par sa sortie (211) sur l'électro-aimant (40) pour connecter la sonnerie de l'abonné. Par conséquent, à partir de ce moment-là, pour l'abonné tout se passe comme s'il disposait normalement d'une ligne téléphonique et il ne remarquera pas qu'il y a eu un nombre de sonneries de durée inférieure au temps T0 qui ont été déconnectées. A la suite de cette étape (505), le micro-calculateur va venir cycliquement effectuer un test pour savoir s'il y a lieu de maintenir la connexion de la sonnerie, ce test étant représenté par l'étape (507). Ce test consiste à venir périodiquement sonder l'entrée (210) du micro-calculateur pour voir s'il y a encore un signal de détection de sonnerie. Dès que le signal de sonnerie disparaît, cela signifie, soit que l'abonné a décroché le combiné, soit que l'appelant s'est découragé et à partir de ce moment-là, dans les deux hypothèses, il n'y a plus lieu de maintenir la sonnerie. Dans ce cas, on passe à l'étape (508) qui consiste à isoler la sonnerie de l'abonné en commandant la sortie (211) de façon à ce que l'électro-aimant (40) par action sur les contacts de la sonnerie débranche celle-ci. Puis le dispositif se met en position d'attente représentée par l'étape (509). Ainsi donc, on constate que dans sa position normale, le poste de l'abonné se trouve avec sa sonnerie isolée, mais que cet état de fait n'apparaît pas à l'abonné car celui-ci ne peut pas se rendre compte de la procédure de test de pré-appel.

En ce qui concerne la station centrale, le micro-ordinateur possède un logiciel qui, après avoir donné l'ordre d'émettre une pré-appel constitué par un certain nombre X de sonneries et après avoir laissé s'écouler à la suite de ce pré-appel un certain temps déterminé, recompose le numéro de la station locale et émet un certain nombre de sonneries pendant un temps plus ou moins long qui pourra être plus long que le temps T0 ou plus court. La logique du micro-ordinateur (31) de la station centrale (3) possède tous les éléments lui permettant de prendre en compte les ordres de blocage ou d'autorisation de procédure délivrée par le système d'analyse des tonalités de lignes, ainsi que par l'ensemble de détection de décroché. En plus, ce logiciel permet d'élaborer par l'intermédiaire du générateur de message vocal un message d'excuse en cas d'erreur que ce soit par l'intermédiaire d'un synthétiseur ou d'un magnétophone.

Enfin, l'opérateur, par le changement d'un logiciel contenu dans une disquette et constituant un programme de communication avec le central d'interrogation, pourra aller récupérer tout ou partie des données reçues, soit pendant les interrogations, soit après la fin des interrogations des stations locales. Ceci permettra par la suite le traitement de ces données par un programme chargé dans l'ordinateur.

On comprend donc, à l'aide de la description ci-dessus, que grâce aux dispositifs décrits et à la méthode mise en oeuvre, on a pu augmenter l'aspect sécuritaire des opérations de télémesure sans perturber le fonctionnement normal d'une ligne téléphonique entre l'abonné et la station centrale, tout en donnant suffisamment de souplesse au système. Enfin, l'utilisation d'un micro-ordinateur permet d'augmenter à la fois la souplesse du système et la souplesse du traitement des informations reçues. Mais l'invention n'est pas limitée au mode de réalisation donné. L'home de l'art pourra apporter toute variante aux détails illustrés. Par exemple, le mode de réalisation illustré prévoit des contacts électro-mécaniques pour mettre en communication par exemple le réseau et l'équipement terminal duplexeur ou la ligne de la station centrale, il est bien évident que l'on pourra utiliser à la place de ces électro-aimants tout relais ou autre moyen de commutation. Il en est de même pour les relais (40) et (41) de la station locale. En outre, la description a été faite en référence à un micro-calculateur et à ces éléments associés. Il est bien entendu que l'homme de l'art pourra utiliser tout dispositif du traitement de l'information.

Cette installation peut être utilisée pour surveiller plusieurs appareils tels que (8) ou plusieurs mesures données par plusieurs sondes telles que (7), et l'on utilisera dans ce cas le code secret pour permettre au microcalculateur de sélectionner l'information à envoyer à la station centrale.

Il est bien évident que des modifications à la portée de l'homme de métier font également partie de l'esprit de l'invention.

### Revendications

1 - Méthode de transmission de données d'information ou de mesure depuis un dispositif local (2, 4, 7) de mesure implanté sur un site éloigné vers une station centrale (4, 3, 6) d'interrogation implantée sur un lieu central où les données sont traitées, par utilisation d'un réseau téléphonique (5) tout en permettant une utilisation normale de la ligne téléphonique, caractérisée en ce que selon cette méthode la sonnerie de l'abonné est maintenue normalement neutralisée et en ce que la transmission des données depuis la station locale (2) vers la station centrale d'interrogation (3) se fait selon les étapes suivantes :
- maintien de la neutralisation de la sonnerie,
- émission pendant une durée de temps To d'un premier appel du central (3) vers la station locale (2) sur la ligne (5), ledit temps To étant au moins égal au temps au bout duquel le réseau PTT a pu vérifier que la ligne n'était pas occupée,
- réitération après un certain laps de temps de l'appel par la station centrale (3) pendant une durée plus longue,
- prise de la ligne par le dispositif local,
- exécution de la procédure de transmission, et en ce que la déneutralisation de la sonnerie n'est effectuée que lors de la réception par la station locale (2) d'un premier appel d'une durée supérieure au temps déterminé To, cette déneutralisation permettant le fonctionnement normal de la ligne, et en ce que la ligne est ensuite reneutralisée à la fin dudit appel.

2 - Méthode selon la revendication 1, caractérisée en ce que le premier appel est émis pendant un temps T0 qui est inférieur à la durée de l'appel réitéré après ledit laps de temps.

3 - Méthode selon la revendication 1, caractérisée en ce que la procédure de transmission comprend les étapes suivantes :
- vérification de l'absence de la porteuse du modem (35) de la station centrale d'interrogation (3),
- émission d'un message vocal par un dispositif générateur de message (23) de la station locale (2),
- cession de la ligne téléphonique avec maintien de l'isolation de la sonnerie.

4 - Méthode selon la revendication 1, caractérisée en ce que la procédure de transmission comprend les étapes suivantes :
- vérification de la présence de la porteuse du modem (35) de la station centrale d'interrogation (3),
- émission par la station centrale d'interrogation (3) d'un code secret,
- transmission des données par la station locale (2) après réception et vérification du code secret,
- acquittement de la bonne réception par la station centrale d'interrogation (3),
- cession de la ligne téléphonique (5) avec maintien de l'isolation de la sonnerie de l'abonné.

5 - Station locale (2) permettant la mise en oeuvre de la méthode selon une des revendications 1 à 4, caractérisée en ce qu'elle comprend un circuit (20) détecteur du signal de sonnerie, des moyens (21) d'évaluer la durée du signal de sonnerie, des moyens (41) d'assurer la prise et la cession de la ligne, des moyens (7) de mesurer une variable , des moyens (21) de mémoriser les mesures de la variable, des moyens (24, 25, 26) de transmission des mesures mémorisées, des moyens (40) de connecter et déconnecter la sonnerie de l'abonné, un microprocesseur (21) de commande des différents moyens et de traitement des instructions d'un programme, des moyens de mémorisation du programme de commande.

6 - Station locale (2) selon la revendication 5, caractérisée en ce qu'elle comprend un dispositif (23) générateur de message vocal, des moyens (22) d'affichage de la mesure mémorisée dans des seconds moyens de mémorisation.

7 - Station centrale d'interrogation (4) permettant la mise en oeuvre de la méthode selon une des revendications 1 à 4, caractérisée en ce qu'elle comprend un microprocesseur (31) avec ses mémoires vive et morte nécessaires au fonctionnement et à l'exécution des programmes, un moyen (41) de prise de terre, un système d'analyse des tonalités de ligne, un dispositif composeur d'appel (32), un modem (35), une interface de ligne avec dispositif duplexeur (36), une interface (39) vers un dispositif (6) de traitement de données.

8 - Station centrale d'interrogation (3) selon la revendication 7, caractérisée en ce que le dispositif (6) de traitement de données est un micro-ordinateur (60) avec ses périphériques associés (61), (62).

9 - Station centrale d'interrogation (3) selon la revendication 8, caractérisée en ce qu'un programme d'interrogation chargé par des disquettes sur le micro-ordinateur (60) permet de choisir le type du programme d'interrogation en fonction de l'application et le nombre de stations locales à appeler.

10 - Station centrale d'interrogation (3) selon la revendication 8, caractérisée en ce qu'un programme de communication avec le dispositif central (3) permet de récupérer tout ou partie des données pendant les interrogations ou après la fin des interrogations.

FIG.1

0264311

FIG.2

FIG.3

FIG. 4

0264311

## FIG.5

DÉTECTION SONNERIE

501 PRÉAVIS EN COURS — NON → 602 APPEL COURT — NON →

OUI

OUI

502 DEBUT DU PRÉAVIS

503 ATTENTE

505 CONNECTION SONNERIE DE L'ABONNÉ

506

507 MAINTIEN SONNERIE — OUI

NON

510 PRISE DE LIGNE

511 PORTEUSE MODEM — NON →

OUI

512 PROCÉDURE DE TRANSMISSION

515 MESSAGE VOCAL D'EXCUSE

508 ISOLATION SONNERIE DE L'ABONNÉ

513 CESSION DE LIGNE

516 CESSION DE LIGNE

514 ATTENTE

517 ATTENTE

509 ATTENTE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-A-2 500 246 (PINET)<br>* Page 3, ligne 26 - page 4, ligne 4; page 7, ligne 29 - page 9, ligne 32; figure 1 *<br>--- | 1-4 | H 04 M 11/00 |
| A | DE-A-3 213 217 (EICHLER)<br>* Page 10, ligne 20 - page 12, ligne 10; figure 2 *<br>--- | 1,2 | |
| A | FR-A-2 528 647 (THOMSON-CSF)<br>* Page 7, lignes 17-20 *<br>--- | 1,3,5-7 | |
| A | GB-A-2 099 260 (TIMEX)<br>* Page 2, lignes 6-25; page 2, ligne 33 - page 3, ligne 30; page 4, lignes 29-49 *<br>--- | 1,4,5,7 | |
| A | US-A-4 126 762 (MARTIN et al.)<br>* Colonne 2, ligne 52 - colonne 3, ligne 41 *<br>--- | 1,5,7 | |
| A,D | GB-A-2 097 223 (TECNOENERGIA SRL)<br>* Page 1, lignes 63-128; page 2, ligne 62 - page 3, ligne 80 *<br>--- | 1,5,7-10 | DOMAINES TECHNIQUES RECHERCHES (Int. Cl.4)<br><br>H 04 M |
| A | FR-A-2 543 302 (ELECTRICITE DE FRANCE)<br>* Page 3, lignes 15-26; page 7, lignes 4-7 *<br>----- | 1,5-7 | |

Le présent rapport a été établi pour toutes les revendications

| Lieu de la recherche | Date d'achèvement de la recherche | Examinateur |
|---|---|---|
| LA HAYE | 01-12-1987 | MIKKELSEN C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
························································································
& : membre de la même famille, document correspondant

EPO FORM 1503 03.82 (P0402)